# EUROPEAN PATENT APPLICATION

(11) **EP 2 458 436 A1**
(43) Date of publication of application: **30.05.2012**
(21) Application number: 10016052.2
(22) Date of filing: 23.12.2010
(51) Int. Cl.: G03B 21/14, G03B 17/54, G03B 21/00, H04N 9/31

(54) **Projection display device, portable terminal device, and portable camera**

(30) Priority: 17.12.2009 JP 2009286622
(71) Applicant: Sanyo Electric Co., Ltd., Osaka 570-8677 (JP)
(72) Inventor: Kotani, Kazunori, Moriguchi-City, Osaka 570-8677 (JP)
(74) Representative: Glawe, Delfs, Moll

(57) **Abstract**

A projection display device modulates light from a light source and projects the modulated light onto a projection plane. The projection display device includes a brightness detecting section that detects the brightness of a surrounding environment and a brightness notifying section that makes a notification in accordance with a result of detection by the brightness detecting section.

## Description

*This application claims priority under 35 U.S.C. Section 119 of Japanese Patent Application No.*2009-286622 filed December 17, 2009*, entitled "PROJECTION DISPLAY DEVICE, PORTABLE TERMINAL DEVICE, AND PORTABLE CAMERA" . The disclosure of* the *above application is incorporated herein by reference.*

### BACKGROUND OF THE INVENTION

### 1. Field of the Invention

The present invention relates to projection display devices, portable terminal devices, and portable cameras.

### 2. Disclosure of Related Art

Conventionally, if a projection display device (hereinafter, referred to as "projector") is used in a lighted surrounding environment, there is a problem of deteriorated quality of a projected image such as a reduced contrast.

In recent years, palm-sized, ultra-compact projectors have been developed, and mobile phones and digital cameras have been provided with projector mechanisms, so that users can readily carry those devices to project and display picture images in various locations. Such ultra-compact projectors, mobile phones and digital cameras with projectors are small in outer size. Therefore, it is difficult to put high-intensity light sources in those devices, and thus images from those devices may be significantly deteriorated in picture quality in lighted environments.

Accordingly, a projector can be implemented so as to measure the brightness of a surrounding environment and stop a projection operation if the measured brightness exceeds a prescribed value.

However, it is only after such a projector has started a projection operation and then stopped the projection operation that the user notices that favorable projection display cannot be perform. Therefore, it will take plenty of time and effort to look for a location enabling favorable projection display or to make a surrounding environment dark.

### SUMMARY OF THE INVENTION

A first aspect of the present invention relates to a projection display device that modulates light from a light source and projects the modulated light onto a projection plane. The projection display device in the first aspect includes a brightness detecting section that detects the brightness of a surrounding environment and a brightness notifying section that makes a notification in accordance with a result of detection by the brightness detecting section.

According to the projection display device in the first aspect, a notification is made in accordance with the brightness of a surrounding environment, which allows a user to understand easily whether the brightness of a surrounding environment is suited for projection display.

In the projection display device of the first aspect, the brightness notifying section may be configured to make a notification in accordance with the result of detection when no projection operation is performed.

For example, the brightness notifying section may be configured to make the notification before a projection operation is performed.

In such a configuration, projected light such as light reflected from a projection plane has no influence on detection by the brightness detecting section, whereby the brightness of a surrounding environment can be detected with high accuracy. In addition, this configuration avoids unnecessary projection, which leads to reduced power consumption.

In the projection display device of the first aspect, the brightness notifying section may be configured to include an indicating section that make a notification by light. In this case, the brightness detecting section and the indicating section are arranged on different planes in a housing of the projection display device.

In such a configuration, it is possible to suppress the influence of light from the indicating section on detection of brightness of a surrounding environment, whereby the brightness of a surrounding environment can be detected with high accuracy.

A second aspect of the present invention relates to a portable terminal device that has a function of modulating light from a light source and projecting the modulated light onto a projection plane. The portable terminal device of the second aspect includes a brightness detecting section that detects the brightness of a surrounding environment and a brightness notifying section that makes a notification in accordance with a result of detection by the brightness detecting section.

According to the portable terminal device of the second aspect, a user can understand easily whether the brightness of a surrounding environment is suited for projection display, as in the first aspect.

A third aspect of the present invention relates to a portable camera that has a function of modulating light from a light source and projecting the modulated light onto a projection plane. The portable camera of the third aspect includes a brightness detecting section that detects the brightness of a surrounding environment and a brightness notifying section that makes a notification in accordance with a result of detection by the brightness detecting section.

According to the portable camera of the third aspect, a user can understand easily whether the brightness of a surrounding environment is suited for projection display, as in the first aspect.

### BRIEF DESCRIPTION OF THE DRAWINGS

The foregoing and other objects and novel features of the present invention will be more fully understood from the following description of a preferred embodiment when reference is made to the accompanying drawings.
FIG. 1 is a diagram showing a configuration of a projector in an embodiment of the present invention;
FIGs. 2A and 2B are diagrams showing a configuration of an optical engine and a projection lens in the embodiment;
FIG. 3 is a block diagram showing a configuration of the projector in the embodiment;
FIG. 4 is a diagram showing a process flow of operation control of the projector in the embodiment;
FIGs. 5A, 5B, and 5C are diagrams showing indications of an illuminance indicating section on the basis of results of comparison between a detected illuminance and reference illuminances in the embodiment;
FIGs. 6A and 6B are diagrams showing a configuration of a mobile phone in an embodiment of the present invention; and
FIG. 7 is a diagram showing a configuration of a digital camera in an embodiment of the present invention.

However, the drawings are only for purpose of description, and do not limit the scope of the present invention.

### DESCRIPTION OF PREFERRED EMBODIMENTS

An embodiment of the present invention will be described below with reference to the drawings.

In the embodiment shown below, cabinets 10, 11, and 12 are equivalent to a "housing" recited in the claims; illuminance sensors 40, 41, and 42 are equivalent to a "brightness detecting section" recited in the claims; illuminance indicating sections 50, 51, and 52, and a control section 701 are equivalent to a "brightness notifying section" recited in the claims; and the illuminance indicating sections 50, 51, and 52 are equivalent to an "indicating section" recited in the claims. However, the foregoing correspondences between the claims and this embodiment are shown as merely examples, and the claims are not limited to by this embodiment.

### <Embodiment of a projection display device>

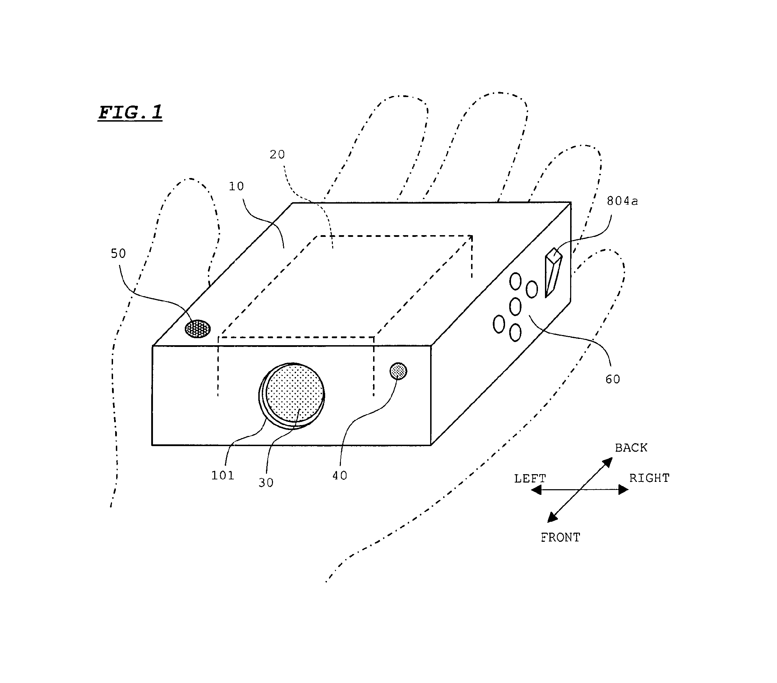

With reference to FIGs. 1 to 5, a projector in an embodiment of the projection display device of the present invention will be described below.

FIG. 1 is a perspective external view of a configuration of the projector. The projector of this embodiment is a palm-sized (pocket-sized), ultra-compact projector. Dimensions of the projector are about several tens to a hundred and several tens of mm in width, height, and depth. In addition, the projector includes an LED light source as described later, and luminance of the light source is about several to several tens of lumens (l m).

As shown in FIG. 1, the projector includes a cabinet 10, an optical engine 20, a projection lens 30, an illuminance sensor 40, an illuminance indicating section 50, and an operating section 60.

The cabinet 10 has the shape of a vertically long, approximately rectangular parallelepiped. The cabinet 10 has a projection window 101 on a center of front surface thereof. From the projection window 101, an outgoing plane of the projection lens 30 is oriented forward.

The optical engine 20 is placed within the cabinet 10. The optical engine 20 generates an image in accordance with an input image signal and outputs the generated image to the projection lens 30.

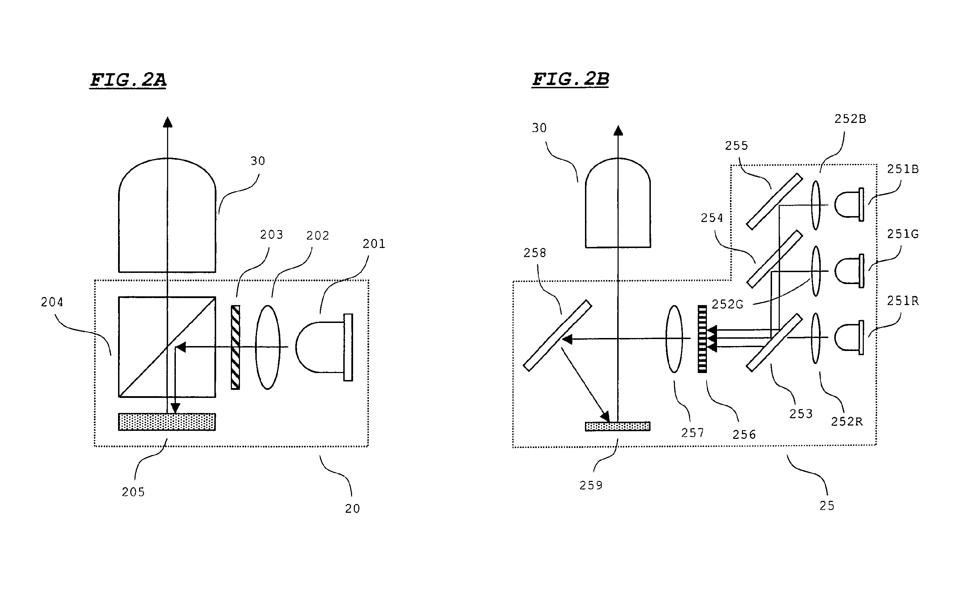

FIG. 2A is a diagram showing a configuration of the optical engine 20 and the projection lens 30.

The optical engine 20 includes a light source section 201, a free-form surface lens 202, a PBS array 203, a PBS 204, and a light modulating section 205.

The light source section 201 is constituted by an LED emitting white light. Light emitted from the light source section 201 enters the free-form surface lens 202. The free-form surface lens 202 performs a lens function on the incident light so as to be properly radiated to the light modulating section 205. The light coming out of the free-form surface lens 202 passes through the PBS array 203, thereby to be aligned in a direction of polarization so as to be S-polarized light with respect to the PBS 204. The S-polarized light having passed through the PBS array 203 is reflected by the PBS 204 and is radiated to the light modulating section 205.

The light modulating section 205 is constituted by reflective liquid crystal panels having RGB color filters. The light modulating section 205 modulates and reflects a light of a red wavelength band (hereinafter, referred to as R light), a light of a green wavelength band (hereinafter, referred to as G light), and a light of a blue wavelength band (hereinafter, referred to as B light), which have passed through the respective RGB color filters, for each pixel in accordance with an image signal.

The R, G, and B lights coming out of the light modulating section 205 pass through the PBS 204 in directions of polarization, and enter the projection lens 30 as image light.

The projection lens 30 enlarges and projects the image light emitted from the optical engine 20 onto a projection plane. The projection lens 30 includes a focus lens (not shown) movable in a direction of a light axis thereof. The focus lens is moved back and forth for focus adjustments.

Returning to FIG. 1, the illuminance sensor 40 is arranged near an upper right corner of a front surface of the cabinet 10, and a sensor plane of the illuminance sensor 40 is oriented forward. The illuminance sensor 40 detects an illuminance based on the brightness of a surrounding environment of the projector, and outputs a detection signal in accordance with the illuminance.

The illuminance indicating section 50 is arranged near a left anterior corner of a top surface of the cabinet 10. The illuminance indicating section 50 includes an LED, and alters an LED status in accordance with the illuminance detected by the illuminance sensor 40, that is, the brightness of a surrounding environment.

The operating section 60 is arranged on the right surface of the cabinet 10. The operating section 60 has a plurality of operation buttons such as a start/stop button, and outputs an operation signal corresponding to a pressed operation button.

Besides the operating section 60, an operation switch section 804a of a power switch 804 described later is arranged on the right surface of the cabinet 10. A user can operate the operation switch section 804a to thereby turn on or off the projector.

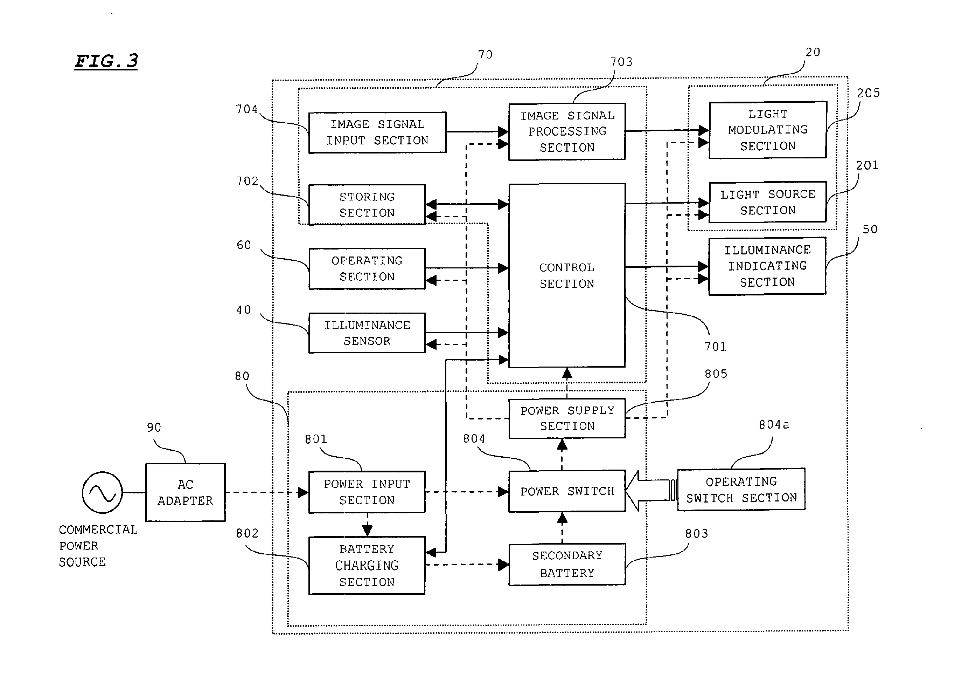

FIG. 3 is a block diagram showing a configuration of the projector. In FIG. 3, solid arrows indicate signal lines and dashed arrows indicate power lines.

In addition to the arrangements shown in FIG. 2A, the projector includes a control unit 70 and a power source unit 80. The control unit 70 contains a control section 701, a storing section 702, an image signal processing section 703, and an image signal input section 704.

The image signal input section 704 has input terminals such as a composite video terminal and a D-sub terminal. Signal cables from a mobile computer, a mobile phone, a digital camera, and the like are connected to the input terminals. Image signals from connected devices are input into the image signal input section 704.

The image signal processing section 703 subjects an image signal input via the image signal input section 704 to various kinds of processing to thereby generate an image signal suited to the light modulating section 205, and outputs the image signal to the light modulating section 205.

The storing section 702 is constituted by a RAM, a ROM, and the like. The storing section 702 stores a control program to provide the control section 701 with control functions.

The control section 701 includes a CPU. The control section 701 accepts an operation signal from the operating section 60 and a detection signal from the illuminance sensor 40. The control section 701 controls the light source section 205, the image signal processing section 703, and the illuminance indicating section 50, in accordance with an operation signal or a detection signal, pursuant to the control program stored in the storing section 702.

The power source unit 80 includes a power input section 801, a battery charging section 802, a secondary battery 803, a power switch 804, and a power supply section 805.

The power source unit 80 is connected to an AC adapter 90 at a time of charging. The AC adapter 90 is connected to a commercial power source to thereby convert an alternating-current voltage of the commercial power source into a direct-current voltage, and supply the direct-current voltage to the power source unit 80.

The power input section 801 supplies the direct-current voltage from the AC adapter 90 to the battery charging section 802. The battery charging section 802 charges the secondary battery 803. At that time, the battery charging section 802 performs charging control so as not to overcharge the secondary battery 803. In addition, the battery charging section 802 outputs a charging status and the like to the control section 701.

The secondary battery 803 outputs a direct-current voltage via the power switch 804 to the power supply section 805. The power supply section 805 converts the input direct-current voltage into a direct-current voltage with magnitude suited to components of the projector such as the control section 701, and supplies the direct-current voltage to the components. When the AC adapter 90 is connected to the power source unit 80, the power input section 801 supplies a direct-current voltage directly to the power supply section 805.

The power switch 804 has the operation switch section 804a as described above, and connects or shuts off a power line from the secondary battery 803 and the power input section 801 to the power supply section 805. When a user performs a power-on operation, the power switch 804 is turned on. Accordingly, the power line is connected to supply a direct-current voltage to the power supply section 805. In contrast, when a user performs a power-off operation, the power switch 804 is turned off. Accordingly, the power line is shut off to stop supply of a direct-current voltage to the power supply section 805. The power switch 804 may use a rocker switch (seesaw switch), a slide switch, a lever switch, or the like, for example.

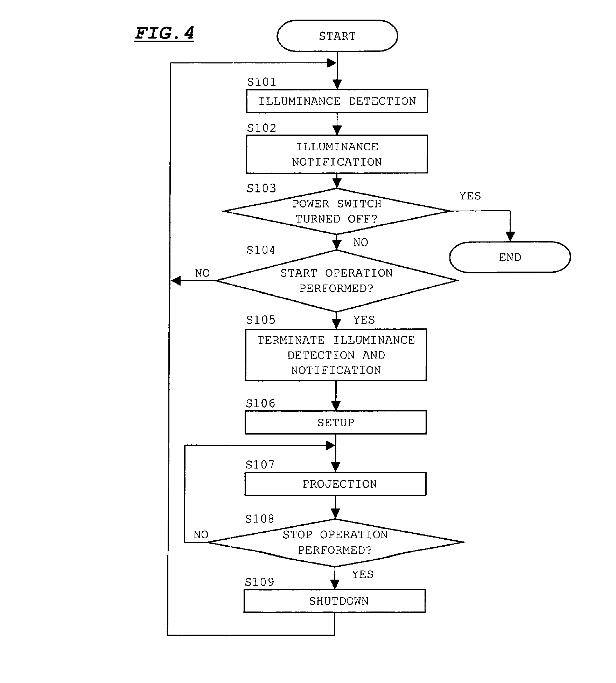

FIG. 4 is a diagram showing a process flow of operation control of the projector.

When the projector is not used, the power switch 804 is generally turned off. Accordingly, no power is supplied to the power supply section 805, and therefore no power is supplied to the components of the projector.

If the projector is to be used for projection display, a user first operates the operation switch section 804a to turn the power switch 804 on.

When the power switch 804 is turned on to supply power to the power supply section 805, the control section 701 is activated. Accordingly, the projector enters a standby state.

The control section 701 acquires a detection signal (illuminance) from the illuminance sensor 40 (S101) . Then, the control section 701 causes the illuminance indicating section 50 to make a notification in accordance with the acquired illuminance (S102).

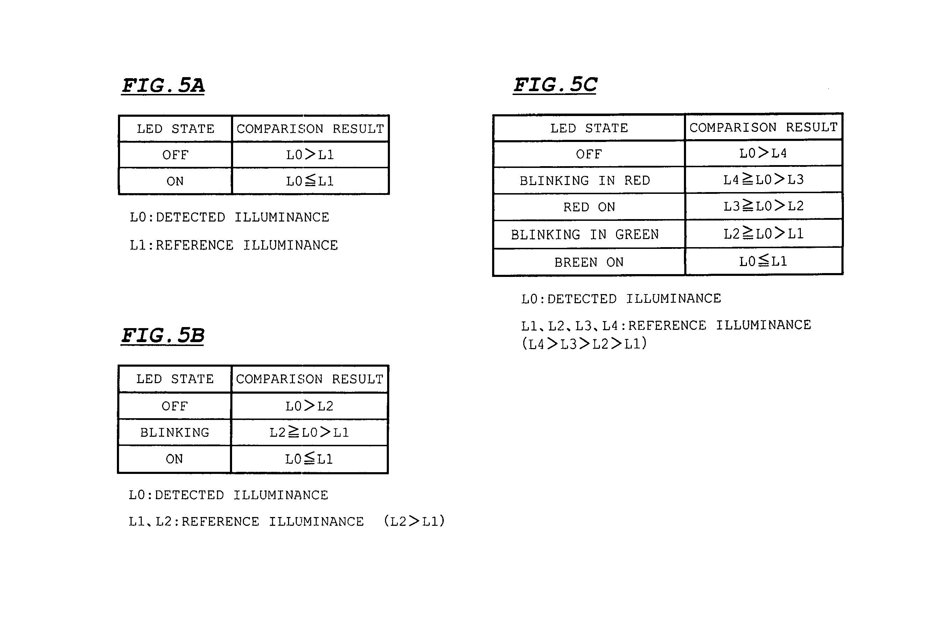

For example, the storing section 702 stores as a threshold value of illuminance (reference illuminance: L1) with respect to a detected illuminance (detected illuminance: L0) , as shown in FIG. 5A. In addition, the control program is preset with indications of the illuminance indicating section 50 (LED states) in accordance with results of comparison between the detected illuminance L0 and the reference illuminance L1 . The reference illuminance L1 is an uppermost illuminance with which favorable image quality can be obtained, for example.

If the detected illuminance L0 is higher than the reference illuminance L1, the control section 701 turns off the LED of the illuminance indicating section 50. If the detected illuminance L0 is lower than the reference illuminance L1, the control section 701 turns on the LED of the illuminance indicating section 50.

If the LED of the illuminance indicating section 50 is turned off, a user can know that the place is too bright to perform favorable projection display using the projector. In this case, the user carries the projector to a darker place, turns off room light or draws a curtain to darken a surrounding environment.

In contrast, if the LED of the illuminance indicating section 50 is turned on, a user can know that the place is sufficiently dark and suited for image projection by the projector. In this case, the user installs the projector in that place and starts operation of the projector.

As shown in FIGs. 5B and 5C, a plurality of reference illuminances can be provided. FIG. 5B shows correspondences between comparison results with two reference illuminances L1, L2 and LED states. FIG. 5C shows correspondences between comparison results with four reference illuminances and LED states. If a larger number of reference illuminances are provided in such a manner, a more detailed notification of illuminance is possible, although the illuminance indicating section 50 may be complicated in configuration and control. Therefore, the number of reference illuminances can be set as appropriate in consideration of accuracy of illuminance notification, costs, and the like. If the notification pattern of FIG. 5C is used, the illuminance indicating section 50 has two LEDs emitting red and green lights.

If the power switch 804 is not turned off (S103: NO) , the control section 701 repeats detection of an illuminance (S101) and a notification (S102) in accordance with the detected illuminance during standby time (S104: NO).

After checking that projection display is possible from an indication of the illuminance indicating section 50, a user then makes settings and preparations for device(s). For example, a user connects an image source device such as a mobile computer, a mobile phone, a digital camera, or the like, to the projector using a signal cable. A user can carry these image source devices together with the projector to various locations such as a destination of a business trip or a private travel, and can connect the image source device to the projector.

Upon completion of the device setting, the user presses the start/stop button on the operating section 60 to start operation.

When a start operation is performed (S104: YES), the control section 701 terminates detection and notification of an illuminance (S105). Then, the control section 701 performs setup processes for bringing the projector into an operational state such as turning on the light source section 201 (S106) .

When the setup processes are completed and an image signal is input externally via the image signal input section 704, the control section 701 starts a projection operation (S107) . As described above, the image signal processing section 703 outputs an image signal to the light modulating section 205, whereby an image in accordance with the image signal is projected through the projection lens 30 onto a projection plane.

If the projector is to be stopped, the user presses the start/stop button again.

When a stop operation is performed (S108 : YES), the control section 701 carries out predetermined shutdown processes to stop the operation of the projector such as turning off the light source section 311 (S109).

When the shutdown is completed and the operation is stopped to return the projector into the standby state, the control section 701 performs again detection of an illuminance (S101) and a notification in accordance with the detected illuminance (S102) .

As described above, according to this embodiment, an illuminance is detected in accordance with the brightness of a surrounding environment and a notification is made in accordance with the illuminance, which allows a user to check easily whether the brightness of a surrounding environment is suited for projection display. Therefore, before actually performing projection display by the projector, a user can take appropriate measures such as installing the projector in a place with brightness favorable for projection or darkening a surrounding environment.

In addition, according to this embodiment, an illuminance is detected and a notification is made in accordance with the illuminance before a projection operation is performed, whereby it is possible to detect an illumination with no influence of projected light such as reflected light from a projection plane. Therefore, illuminance detection can be made with high accuracy in accordance with the brightness of a surrounding environment. In addition, this embodiment eliminates unnecessary projection, which leads to reduction in power consumption.

Further, according to this embodiment, the illuminance sensor 40 and the illuminance indicating section 50 are separately arranged on the right and left ends of the cabinet 10 such that a distance between the two components is made as longer as possible. In addition, the illuminance sensor 40 and the illuminance indicating section 50 are arranged on different planes of the cabinet 10. Accordingly, it is possible to prevent that light emitted from the illuminance indicating section 50 enters the illuminance sensor 40. This realizes illuminance detection with high accuracy in accordance with the brightness of a surrounding environment.

### <Embodiment of a portable terminal device>

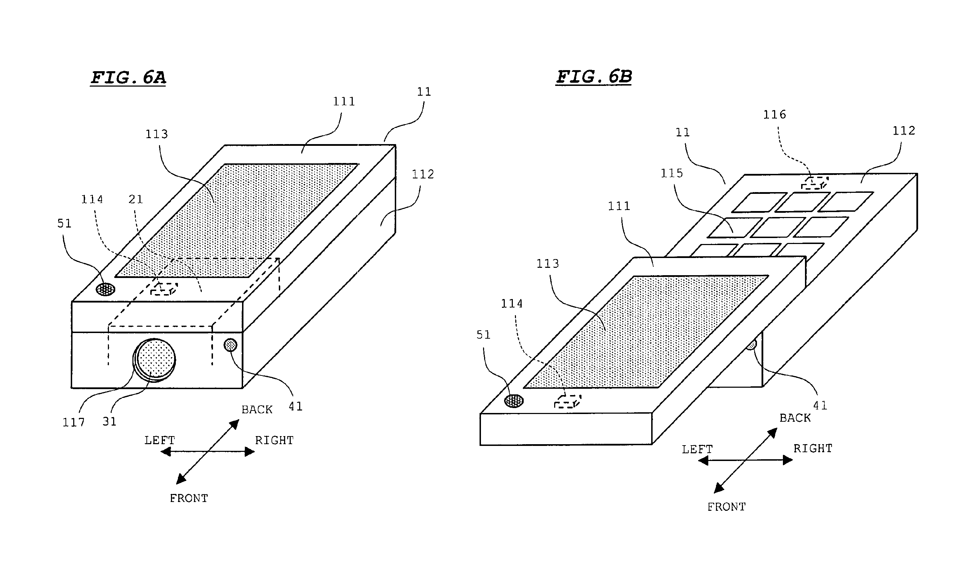

A mobile phone as one embodiment of a portable terminal device of the present invention will be described with reference to FIGs. 6A and 6B. The mobile phone of this embodiment is a mobile phone to which projector functions are added (a mobile phone with a projector).

FIGs. 6A and 6B are perspective external views of a configuration of the mobile phone. FIG. 6A shows a first cabinet 111 in a closed state. FIG. 6B shows the first cabinet 111 in an open state.

A cabinet 11 of the mobile phone is constituted by the first cabinet 111 and a second cabinet 112. The first cabinet 111 has a display 113 for displaying characters and images, and a speaker 114 through which voice from the other end of the telephone line is reproduced during telephone communications . Meanwhile, the second cabinet 112 has an operating section 115 with various operation keys and a microphone 116 for collecting a user's voice during telephone communications.

The first cabinet 111 is held by the second cabinet 112 so as to be slidable in an anteroposterior direction. When the first cabinet 111 is opened, the operation section 115 is exposed outside as shown in FIG. 6B.

The mobile phone includes an optical engine 21, a projection lens 31, an illuminance sensor 41, and an illuminance indicating section 51, as an arrangement for the projector.

The optical engine 21 and the projection lens 31 are arranged within the second cabinet 112. An outgoing plane of the projection lens 31 is oriented forward from a projection window 117 formed on a front surface of the second cabinet 112. The optical engine 21 and the projection lens 31 are configured in the same manner as the optical engine 20 and the projection lens 30 of the projector shown in FIGs . 1 and 2A, respectively. Image light generated by the optical engine 21 is enlarged and projected by the projection lens 31 onto a projection plane.

The illuminance sensor 41 is arranged near an upper right corner of a front surface of the second cabinet 112. The illuminance indicating section 51 is arranged near a left anterior corner of a top surface of the first cabinet 111. The illuminance sensor 41 and the illuminance indicating section 51 are configured in the same manner as the illuminance sensor 40 and the illuminance indicating section 50 of the projector shown in FIG. 1, respectively.

The mobile phone further has a control unit (not shown) identical to the control unit 70 shown in FIG. 3, as an arrangement for the projector. This control unit exercises operation control as shown in FIG. 4. Specifically, in the mobile phone of this embodiment, before starting of a projection operation, the illuminance sensor 41 detects an illuminance in accordance with the brightness of a surrounding environment, and the illuminance indicating section 51 makes a notification in accordance with the detected illuminance.

Therefore, according to the mobile phone in this embodiment, a user can easily check whether the brightness of a surrounding environment is suited for projection display, as in the projector of the foregoing embodiment.

In this embodiment, the projector can project not only an image loaded from a personal computer or the like but also an image shot by a camera of the mobile phone, an image attached to an e-mail message, and an image acquired from the Internet using a communication function of the mobile phone.

### <Embodiment of a portable camera>

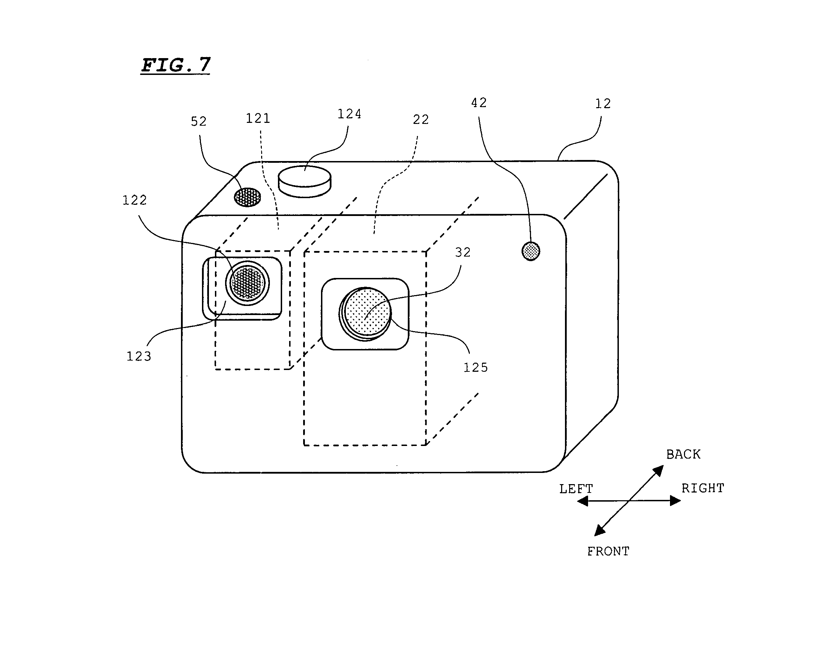

A digital camera as one embodiment of a portable camera of the present invention will be described below with reference to FIG. 7. The digital camera of this embodiment is a digital camera to which projector functions are added (a camera with a projector).

FIG. 7 is a perspective external view of a configuration of the digital camera.

A cabinet 12 of the digital camera contains a camera module 121 and an imaging lens 122 for capturing an image of a subject into the camera module 121. The imaging lens 122 is oriented forward from a lens window 123 on a front surface of the cabinet 12. Light captured from the imaging lens 122 is received by a light-receiving element (CCD) within the camera module 121 via an internal optical system.

A shutter button 124 is arranged on a top surface of the cabinet 12. A user can shoot a photo by pressing the shutter button 124. When the shutter button 124 is pressed, a signal from the light-receiving element (CCD) is processed and stored into a memory within the digital camera.

The digital camera includes an optical engine 22, a projection lens 32, an illuminance sensor 42, and an illuminance indicating section 52, as an arrangement for a projector.

The optical engine 22 and the projection lens 32 are arranged within the cabinet 12. An outgoing plane of the projection lens 32 is oriented forward from a projection window 125 formed on a front surface of the cabinet 12. The optical engine 22 and the projection lens 32 are configured in the same manner as the optical engine 20 and the projection lens 30 of the projector shown in FIGs. 1 and 2A, respectively. Image light generated by the optical engine 22 is enlarged and projected by the projection lens 32 onto a projection plane.

The illuminance sensor 42 is arranged near an upper right corner of a front surface of the cabinet 12. The illuminance indicating section 52 is arranged near a left anterior corner of a top surface of the cabinet 12. The illuminance sensor 42 and the illuminance indicating section 52 are configured in the same manner as the illuminance sensor 40 and the illuminance indicating section 50 of the projector shown in FIG. 1, respectively.

The digital camera further has a control unit (not shown) identical to the control unit 70 shown in FIG. 3, as an arrangement for the projector. The control unit exercises operation control as shown in FIG. 4. Specifically, in the digital camera of this embodiment, before starting of a projection operation, the illuminance sensor 42 detects an illuminance in accordance with the brightness of a surrounding environment, and the illuminance indicating section 52 makes a notification in accordance with the detected illuminance.

Therefore, according to the digital camera in this embodiment, a user can easily check whether the brightness of a surrounding environment is suited for projection display, as in the case of the projector of the foregoing embodiment.

In this embodiment, the projector can project not only an image loaded from a personal computer and the like but also an image shot by the digital camera.

### <Others>

The embodiments of the present invention can further be modified in various manner besides the ones described above.

For example, instead of the optical engine 20 (21, 22) shown in FIG. 2A, the optical engine 25 shown in FIG. 2B may be mounted on the foregoing projector, mobile phone, or digital camera.

As shown in FIG. 2B, the optical engine 25 includes three light source sections 251R, 251G, and 251B. The light source section 251R is constituted by an LED emitting an R light. The light source section 251G is constituted by an LED emitting a G light. The light source section 251B is constituted by an LED emitting a B light. The light source sections 251R, 251G, and 251B emit lights in a time-division manner.

The R light emitted from the light source section 251R passes through a lens 252R and enters a dichroic mirror 253. The dichroic mirror 253 reflects B and G lights and lets the R light pass through. The R light passes through the dichroic mirror 253 and enters a fly-eye lens array 256.

The G light emitted from the light source section 251G passes through a lens 252G and enters a dichroic mirror 254. The dichroic mirror 254 reflects the G light and lets the B light pass through. The G light is reflected by the dichroic mirror 254, further is reflected by the dichroic mirror 253, and then enters the fly-eye lens array 256.

The B light emitted from the light source section 251B passes through a lens 252B and is reflected by a mirror 255. Then, the B light passes through the dichroic mirror 254, further is reflected by the dichroic mirror 253, and then enters the fly-eye lens array 256.

The fly-eye lens array 256 is constituted by a pair of lenses, each of which is formed by a large number of cells arranged in a fly-eye pattern. These cells divide incident lights (R, B, and G lights) . The divided lights are subjected to lens action of a condenser lens 257 and reflection by a mirror 258, and then are superimposed on a DMD 259. Accordingly, the lights irradiated to the DMD 259 are unified in light quantity distribution.

The DMD 259 includes micro mirrors that are driven individually and independently, and modulates the R, G, and B lights radiated in a time-division manner in accordance with an image signal. The modulated R, G, and B lights are enlarged and projected in sequence by the projection lens 30 onto a projection plane.

Since emissions of the R, G, and B lights are switched at an extremely high speed, the projected R, G, and B lights are combined on the projection plane. The combined light can be seen as one color image with a user's eyes.

In addition, the illuminance sensor 40 (41, 42) is not necessarily positioned as in the foregoing three embodiments. The illuminance sensor 40 (41, 42) may be arranged in any position on any surface of the cabinet 10 (11, 12) as far as the sensor 40 (41, 42) can detect properly the brightness of a surrounding environment. Similarly, the illuminance indicating section 50 (51, 52) may be arranged in any position on any surface of the cabinet 10 (11, 12) as far as a user can see easily the indicating section. As described above, however, the illuminance sensor 40 (41, 42) and the illuminance indicating section 50 (51, 52) are desirably arranged on different surfaces and with as a longer distance as possible therebetween, so that light from the illuminance indicating section 50 (51, 52) does not enter the illuminance sensor 40 (41, 42).

Further, in the embodiments of a projector and a digital camera, the LED and the illuminance sensor 40 (41) may be surrounded with a light-blocking wall member, thereby to prevent light from the LED of the illuminance indicating section 50 (52) from entering the illuminance sensor 40 (41) within the cabinet 10 (12).

In addition, in the foregoing three embodiments, the illuminance indicating section 50 (51, 52) may have a slit at the outgoing window of light from the LED, so that light from the LED travels increasingly straightforward. This makes the light from the LED less prone to spread peripherally and thus less prone to enter the illuminance sensor 40 (41, 42).

Further, in the foregoing three embodiments, the illuminance indicating section 50 (51, 52) makes a notification of an illuminance by light. However, the means of making a notification is not limited to by this, and a notification of an illuminance may be made in other manners. For example, a speaker may be used to make a notification in accordance with an illuminance by sound (voice, beep, or the like). Making a notification by sound eliminates the need to consider the influence of light for notification to the illuminance sensor 40 (41, 42).

In addition, an ultra-compact projector is exemplified as one embodiment of the projection display device of the present invention. Alternatively, the present invention may be applied to projectors larger than such an ultra-compact projector such as projectors for domestic and business uses.

However, it is difficult to provide a high-intensity light source to an ultra-compact projector, a mobile phone with a projector, a camera with a projector described above, because those devices are small in outer size and use a secondary battery as a power source. Accordingly, those devices are extremely prone to be influenced by the brightness of a surrounding environment, as compared with projectors for domestic and business uses that are higher in luminance level.

In addition, projectors for domestic and business uses are limited in installation locations, whereas an ultra-compact projector and the like as described above can easily be carried and installed in various locations.

Therefore, if the present invention is applied to such an ultra-compact projector, a mobile phone with a projector, and a camera with a projector, those devices allow a user to find easily a favorable installation place in various usage situations, which provides the user with significantly improved usability.

Further, although a mobile phone is exemplified as an embodiment of the portable terminal device in the present invention, the present invention may also be applied to a personal digital assistant (PDA). In addition, although a digital camera is exemplified as an embodiment of the potable camera in the present invention, the present invention may also be applied to a digital video camera.

Besides, the embodiments of the present invention may be alternatively modified in various manners within the scope of technical ideas recited in the claims.

## Claims

1. A projection display device that modulates light from a light source and projects the modulated light onto a projection plane, comprising:
a brightness detecting section that detects the brightness of a surrounding environment; and
a brightness notifying section that makes a notification in accordance with a result of detection by the brightness detecting section.

2. The projection display device according to Claim 1,
wherein
the brightness notifying section makes a notification in accordance with the result of detection when no projection operation is performed.

3. The projection display device according to Claim 2,
wherein
the brightness notifying section makes the notification before a projection operation is performed.

4. The projection display device according to any one of Claims 1 to 3, wherein
the brightness notifying section includes an indicating section that make a notification by light, and
the brightness detecting section and the indicating section are arranged on different planes in a housing of the projection display device.

5. A portable terminal device, comprising:
the projection display device according to any one of Claims 1 to 4.

6. A portable camera, comprising:
the projection display device according to any one of Claims 1 to 4.
